# EUROPÄISCHE PATENTSCHRIFT

(11) **EP 1 012 899 B1**
(45) Veröffentlichungstag und Bekanntmachung des Hinweises auf die Patenterteilung: **21.05.2003**
(21) Anmeldenummer: 98907894.4
(22) Anmeldetag: 05.01.1998
(51) Int. Cl.: H01P 1/06, H04B 5/00, H01F 38/14

(54) **VORRICHTUNG ZUR KONTAKTLOSEN ÜBERTRAGUNG ELEKTRISCHER SIGNALE UND/ODER ENERGIE**
DEVICE FOR CONTACTLESS TRANSMISSION OF ELECTRICAL SIGNALS AND/OR ENERGY
DISPOSITIF POUR TRANSFERER SANS CONTACT DES SIGNAUX ET/OU DE L'ENERGIE ELECTRIQUES

(30) Priorität: 03.01.1997 DE 19700110; 16.01.1997 DE 19701357
(43) Veröffentlichungstag der Anmeldung: 28.06.2000
(60) Teilanmeldung: 03006661.7
(73) Patentinhaber: Schleifring und Apparatebau GmbH, 82256 Fürstenfeldbruck (DE)
(72) Erfinder: LOHR, Georg, D-82223 Eichenau (DE)
(74) Vertreter: Münich, Wilhelm, Dr.
(86) Internationale Anmeldenummer: DE9800512
(87) Internationale Veröffentlichungsnummer: WO98029919

(56) Entgegenhaltungen:
- EP-A- 0 180 213
- EP-A- 0 707 388
- FR-A- 2 092 709
- US-A- 4 516 097
- US-A- 4 939 400
- PATENT ABSTRACTS OF JAPAN vol. 004, no. 145 (E-029), 14.Oktober 1980 & JP 55 097749 A (KOKUSAI ELECTRIC CO LTD), 25.Juli 1980,

## Beschreibung

### Technisches Gebiet

Die Erfindung bezieht sich auf eine Vorrichtung zur kontaktlosen Übertragung elektrischer Signale und/oder Energie zwischen wenigstens zwei relativ zueinander beweglichen Teilen, bei der an wenigstens einem Teil eine Vielzahl definierter elektromagnetischer Koppelelemente vorgesehen ist, deren Nahfeld die kontaktlose Übertragung bewirkt.

Derartige Vorrichtungen werden zur Übertragung von elektrischen Signalen bzw. elektrischer Energie zwischen zwei oder mehr relativ zueinander beweglichen Teilen eingesetzt. Die Bewegung kann dabei eine rotatorische, eine translatorische oder eine zusammengesetzte Bewegung sein.

Der Übersichtlichkeit halber wird in der vorliegenden Beschreibung nicht zwischen der Übertragung zwischen gegeneinander beweglichen Einheiten und einer feststehenden und dazu beweglichen Einheiten unterschieden, da dies nur eine Frage des Ortsbezugs ist, und keinen Einfluß auf die Funktionsweise der erfindungsgemäßen Vorrichtung hat. Ebenso wird nicht weiter zwischen der Übertragung von Signalen und Energie unterschieden, da die Wirkungsmechanismen gleich sind.

### Stand der Technik

Bei translatorisch und insbesondere linear beweglichen Einheiten wie Kran- und Förderanlagen sowie bei drehbaren Einheiten wie Radaranlagen oder auch Computertomographen ist es notwendig, zwischen gegeneinander beweglichen Einheiten bzw. einer feststehenden und wenigstens einer dazu beweglich angeordneten Einheit elektrische Signale bzw. Energie zu übertragen.

Beispielsweise dann, wenn die Relativgeschwindigkeit der Einheiten vergleichsweise hoch ist, ist es von Vorteil, wenn die Übertragung kontaktlos erfolgt. Eine kontaktlose Übertragung hat darüberhinaus gegenüber einer kontaktierenden Übertragung beispielsweise mittels Schleifkontakten Vorteile, wenn bei der Übertragung digitaler Signale hohe Datenraten übertragen werden sollen bzw. für die Übertragung analoger Signale hohe Bandbreiten erforderlich sind:

Bei herkömmlichen (kreisförmigen) Schleifringen begrenzt der Durchmesser des Schleifrings die maximal übertragbare Frequenz. Diese ist dann erreicht, wenn der Schleifring-Umfang einer halben Wellenlänge der zu übertragenden Signale entspricht.

Vorrichtungen zur kontaktlosen Übertragung von Signalen bzw. elektrischer Energie sind in den verschiedensten Ausführungen bekannt. Hierzu wird u.a. auf das bekannte Lehrbuch Meinke/Gundlach "Taschenbuch der Hochfrequenztechnik" Springer-Verlag, Berlin, 1968, Seite 186 (Resonanzübertrager) verwiesen.

Eine hierauf aufbauende Vorrichtung zur kontaktlosen Übertragung elektrischer Signale und/oder Energie zwischen wenigstens zwei relativ zueinander beweglichen Teilen, von der bei der Formulierung des Oberbegriffs der Patentansprüche 1 bzw. 3 ausgegangen wird, ist aus der DE 42 36 340 C2 bekannt. Bei der aus dieser Druckschrift bekannten Anordnung zur induktiven Übertragung von Energie im Bereich mittlerer Frequenzen von einer auf einem Stator angeordneten Primärspule auf einen mit wenigstens einer Sekundärspule ausgestatteten Verbraucher besteht die Primärspule aus in Gruppen von in Reihe geschalteten Spulen, wobei pro Gruppe ein Kondensator in Reihe geschaltet ist. Alle Gruppen sind jeweils parallel an eine Mittelfrequenzsammelleitung angeschlossen, wobei die Impedanzen jeder Spulengruppe und des jeweiligen Kondensators so bemessen sind, daß bei induktiver Kopplung einer Gruppe an einen der bewegbaren Verbraucher die Resonanzbedingung für diese Gruppe zumindest annähernd erfüllt ist.

Diese bekannte Vorrichtung ist zwar für die Übertragung elektrischer Energie sehr gut geeignet, aufgrund der Tatsache, daß sie als Resonanzübertrager arbeitet, ist sie jedoch nicht für die breitbandige Übertragung elektrischer Signale geeignet. Darüberhinaus kann sie aufgrund der räumlichen Anordnung der Spulen nicht bei Arbeitsfrequenzen im MHz Bereich und darüber eingesetzt werden. Dies schließt einen Einsatz beispielsweise in Computertomographen aus.

Eine insbesondere zum Einsatz in Computertomographen gedachte Vorrichtung zum Übertragen elektrischer Signale zwischen zwei längs einer Strecke relativ zueinander beweglichen, insbesondere relativ zueinander drehbaren Teilen, mit denen eine Sender- bzw. eine Empfängeranordnung verbunden ist, ist aus der DE 33 31 722 A1 bekannt. Diese bekannte Vorrichtung weist an jedem Teil Koppelelemente auf, von denen jedes wenigstens eine Elektrode enthält, so daß das Signal kapazitiv über die jeweils gegenüberstehenden Elektroden übertragen wird.

Diese aus dem Jahre 1983 stammende Vorrichtung hat jedoch ebenfalls den Nachteil, daß sie nicht geeignet ist, Signale mit der derzeit für Computertomographen erforderlichen Bandbreite zu übertragen, da an den Koppelelementen bereits bei niedrigen Frequenzen Reflexionen auftreten. Abhilfe würde zwar die Verwendung von getrennten Verstärkern für jedes Koppelelement schaffen, die Verwendung einer Vielzahl von Verstärkern führt jedoch zu einem hohen Kostenaufwand.

Darüberhinaus führt die Struktur über die offenen Koppeleiemente zu einer sehr hohen elektromagnetischen Störstrahlung.

Aus der DE-OS 26 53 209 ist eine koaxiale Mehrfachdrehkupplung zur Übertragung von Hochfrequenzenergie bekannt, bei der ebenfalls Koppelelemente in Form von Kondensatorplatten verwendet werden, die immer zu 100% im Eingriff sind. Hierdurch ergibt sich zwar ein reflexionsfreier und damit breitbandiger Abschluß.

Der Aufbau der Drehkupplung ist aber insbesondere dann, wenn diese einen großen Durchmesser haben soll, wie es beispielsweise bei Computertomographen erforderlich ist, kompliziert und damit kostenaufwendig.

Aus der DE 44 12 958 A1 und der DE 195 33 819 A1 sind weitgehend ähnliche Vorrichtungen und Verfahren für eine Kommunikation mit hoher Datenrate, insbesondere in einem Computertomographie-System bekannt:

Hierzu wird beispielsweise in einem Computertomographen mittels eines Kopplers elektrische Energie aus einer Übertragungsleitung ausgekoppelt, wobei die Leitung selbst die Funktion des Kopplers übernimmt, also in gleicher Weise wie eine Leckleitung in der Nachrichtentechnik wirkt. Hierzu wird auf das bereits genannte Lehrbuch Meinke/Gundlach, Seite 304 (Stichwort: gekoppelte Leitungen) verwiesen.

Diese bekannten Vorrichtungen weisen damit keine Vielzahl definierter Koppelelemente, sondern lediglich eine Streifenleitung auf, so daß sie einer anderen Gattung als im Oberbegriff der Patentansprüche 1 bzw. 3 vorausgesetzt angehören. Der Nachteil einer solchen Streifenleitung ist die breitbandige Abstrahlung hochfrequenter Energie von der als Koppler dienenden Leitung:

Die Leitung kann beispielsweise in Computertomographen eine Länge von bis zu 4m und in Förderanlagen ein Vielfaches davon besitzen. Daher ist sie bereits bei geringer Fehlanpassung ein Strahler mit sehr niedriger unterer Grenzfrequenz. Ebenso ist sie aufgrund ihrer Ausdehnung sehr empfindlich gegen externe Störungen. Diese werden von der Leitung empfangen und an alle anderen Einheiten weitergeleitet.

Der in der DE 195 33 819 A1 beschriebene Schirm bringt nur eine geringfügige Verbesserung. Anstelle der beschriebenen Dämpfung von maximal 55 dB ist in Versuchen lediglich eine breitbandige Dämpfung von 10 dB mit Spitzenwerten von 20 dB ermittelt worden.

Ein weiterer Nachteil dieser bekannten Verfahren und Vorrichtungen ist, daß im Falle einer Einkopplung von Signalen durch die relativ beweglichen Einheiten in die Leitung nur wenig Energie übertragen werden kann. So müßte zur Verbesserung der Verkopplung die Oberfläche der Leitung vergrößert werden. Dies führt zu einer niedrigen Leitungsimpedanz und damit zu einer erhöhten Störempfindlichkeit.

### Darstellung der Erfindung

Der Erfindung liegt die Aufgabe zugrunde, eine Vorrichtung zur kontaktlosen Übertragung elektrischer Signale und/oder Energie zwischen wenigstens zwei relativ zueinander beweglichen Teilen anzugeben, die bei großer Bandbreit bzw. hohen möglichen Datenraten eine geringe Störempfindlichkeit aufweist.

Eine erfindungsgemäße Lösung dieser Aufgabe ist in den nebengeordneten Patentansprüchen 1 und 3 angegeben. Weiterbildungen der Erfindung sind Gegenstand der abhängigen Ansprüche. Eine Vorrichtung nach dem Oberbegriff von Anspruch 1 ist aus der Druckschrift US-A- 4 516 097 bekannt.

Bei der im Anspruch 1 angegebenen erfindungsgemäßen Lösung enthält jedes der an wenigstens einem Teil vorgesehenen Koppelelemente wenigstens einen Resonator, der aus einem einzigen, in sich und unabhängig von den anderen Koppelelementen resonanzfähigen Element besteht. Die Resonanzfrequenz des bzw. der Resonatoren ist in etwa gleich der Frequenz der zu übertragenden Signale. Die einzelnen Resonatoren sind über eine Leitung miteinander verbunden, die reflexionsfrei abgeschlossen ist. Damit ist es möglich, bei vergleichsweise geringen Abstrahlverlusten die zu übertragenden Signale bzw. die zu übertragende elektrische Energie mit großem Wirkungsgrad zu übertragen. Gleichzeitig ist der Aufbau der erfindungsgemäßen Vorrichtung einfach und damit kostengünstig. Die Resonanz der einzelnen Resonatoren kann eine Serien- oder eine Parallelresonanz sein.

Im Anspruch 2 sind verschiedene, nicht abschließende, jedoch bevorzugte Möglichkeiten für Resonatoren angegeben. Eine besonders bevorzugte Möglichkeit ist neben den aufgeführten Hohlraum-Resonatoren, dielektrischen, ferrimagnetischen und/oder piezoelektrischen Resonatoren der Einsatz von Leitungsresonatoren, da diese einfach und damit kostengünstig aufzubauen und vor allem anzusteuern sind.

Diese Leitungsresonatoren können beispielsweise eine kammförmige Anordnung von leitenden Flächen auf einem Isolator aufweisen, wobei die kammförmige Anordnung durch einen definierten Wellenwiderstand abgeschlossen ist, so daß verglichen mit dem Stand der Technik eine größere räumliche Ausdehnung möglich ist. Diese Anordnung hat darüberhinaus den Vorteil, daß sie einfach und damit kostengünstig auf einer "gedruckten Leiterplatte" zu realisieren ist.

Dabei bildet das Koppelelement z.B. als kurzes Leitungsstück einen Resonator, der bei seiner Resonanzfrequenz besonders günstige Koppeleigenschaften besitzt. Solche Resonatoren können auch Leitungstransformatoren sein, die eine Anpassung der Impedanz der Koppeleinrichtungen an die Impedanz des Leitungssystems vornehmen. Um die Bandbreite und die Güte solcher Resonatorsysteme an die Übertragungsaufgabe anzupassen, können die Resonatoren bedämpft sein bzw. können auf unterschiedliche Resonanzfrequenzen abgestimmte Resonatoren miteinander kombiniert werden.

Bei einer weiteren Ausgestaltung der Erfindung werden die Koppelelemente als resonanzfähige Koppelleitungen ausgeführt. Dies sind Leitungsstücke, die ungeschirmt ausschließlich dem Zweck der Kopplung dienen.

Eine alternative Lösung der erfindungsgemäß gestellten Aufgabe ist im Patentanspruch 3 angegeben. Bei dieser Lösung bilden die Koppelelemente an wenigstens einem Teil eine als Kaskadenschaltung ausgebildete Leiterstruktur, die reflexionsfrei abgeschlossen ist. Weiterhin ist jedes Koppelelement unabhängig von den anderen Koppelelementen an diesem Teil ein Resonanzsystem mit einer Resonanzfrequenz, die größer als die größte Frequenz der zu übertragenden breitbandigen Signale ist.

Unter "Resonanzsystem" bzw. "resonanzfähig" wird im Falle der vorliegenden Erfindung eine zur Signalübertragung bzw. Filterung nutzbare Resonanz verstanden.

Unter Kaskadenschaltung wird im Rahmen der vorliegenden Erfindung der allgemeine Fall einer Verschaltung von Vierpolen verstanden, jedoch keine einfache Serienoder Parallelschaltung. Ein Beispiel für eine Kaskadenschaltung ist der Fall, daß das nachfolgende Koppelelement als Eingangssignal die Spannung bzw. den Strom an wenigstens einem Blindelement des vorigen Koppelelements abgreift.

Insbesondere kann das von den Koppelelementen gebildete System eine Tiefpaßcharakteristik haben. Damit hat das Leitungssystem bei niedrigen Frequenzen Leitungseigenschaften und besitzt bei hohen Frequenzen eine sehr hohe Dämpfung, so daß die erfindungsgemäße Vorrichtung eine sehr große Störfestigkeit aufweist. Unter niedrigen Frequenzen wird hierbei ein zur Übertragung von Signalen nutzbares Frequenzband verstanden, das im Bereich bis zu einigen 100 MHz bis GHz liegen kann. Erfindungswesentlich ist dabei die Eigenschaft, daß durch die Dimensionierung ein zur Übertragung nutzbares Frequenzband, beispielsweise 0-300 MHz selektiert werden kann, Frequenzen oberhalb dieses Frequenzbandes werden stark unterdrückt.

In jedem Falle ist es bevorzugt, wenn die Leiterstruktur als Gesamtheit nicht resonanzfähig ist. Hiermit ist gemeint, daß zwar die Resonatoren, nicht jedoch die Leiterstruktur in dem zur Übertragung genutzten Frequenzband eine Resonanzfrequenz haben.

Beispielsweise hätte eine 100 m lange Leiterstruktur, die Resonatoren mit einer Resonanzfrequenz von 300 MHz enthält, selbst eine Resonanz bei ca. 3 MHz. Diese Resonanz soll nicht zur Informationsübertragung verwendet werden und wird vorteilhafter Weise unterdrückt.

Hierdurch wird die störenden Abstrahlung über die Leiterstruktur minimiert.

Bei beiden erfindungsgemäßen Lösungen erfolgt die Verkopplung der relativ zueinander beweglichen Teile mit einer Vielzahl definierter elektromagnetischer Koppelelemente, die untereinander mit einer Leitung bzw. einer Leiterstruktur verbunden sind, die reflexionsfrei abgeschlossen ist, also einen definierten und angepaßten Wellenwiderstand aufweist. Damit wird in jedem Falle der beim Stand der Technik vorhandene Nachteil der direkten Beeinflussung der Leitung vermieden.

U. a. können damit das Leitungssystem als Mittel zur Übertragung der Signale und die Koppelelemente als Mittel zur Signalkopplung jeweils für sich optimiert werden. Das Leitungssystem kann hier aus einer einzigen Leitung oder auch aus einer Vielzahl miteinander verbundener Leitungen bestehen, welche auch entsprechend dem Stand der Technik verschaltet sein können.

Dabei ist es bevorzugt, wenn der Aufbau symmetrisch ist.

Die Verkopplung kann im allgemeinsten Fall durch elektromagnetische Felder und Wellen und insbesondere induktiv und/oder kapazitiv erfolgen. In speziellen Ausführungen können auch Verkopplungen über rein elektrische bzw. magnetische Felder erfolgen.

Weiterhin ist es bevorzugt, wenn jedes resonanzfähige Koppelelement aus einem Glied besteht, das wenigstens einen induktiv und einen kapazitiv wirkenden Bestandteil enthält.

Insbesondere kann jedes Koppelelement aus einer einzigen Induktivität und einer einzigen Kapazität bestehen. Diese Lösung ist technisch besonders einfach und erfordert einen geringen Dimensionierungsaufwand. Hier kann auch eine spezifische Kopplungsart vorgegeben werden. Bei der Ausführung mittels Kapazitäten erfolgt die Kopplung überwiegend durch elektrische Felder, bei der Ausführung mittels Induktivitäten dagegen durch magnetische Felder. Selbstverständlich ist es aber auch möglich, Koppelelemente zu verwenden, die Resonanzkreis höherer Ordnung enthalten, bei denen beispielsweise zwei Kapazitäten durch zwei parallel geschaltete Induktivitäten verbunden sind.

Die einzelnen Induktivitäten der verschiedenen Koppelelemente eines Teils sind - bei Verwendung einer einzigen Induktivität pro Koppelelement - bevorzugt in Reihe geschaltet, so daß die Grenzfrequenz des Tiefpasses leicht auf die gewünschte Frequenz insbesondere im Bereich von 100 bis 10 000 MHz einstellbar ist. Die in Reihe geschalteten Induktivitäten bilden damit selbst die Leiterstruktur und benötigen daher keine Sammelleitung wie beim Stand der Technik.

Für vorstehend genannten Frequenzbereich ist es weiterhin von Vorteil, wenn eine durchgehende und insbesondere eine "gerade" Leitung die einzelnen Induktivitäten bildet.

In jedem Falle können die Induktivitäten bzw. Kapazitäten als Strukturen einer Leiterplatte ausgebildet sein, so daß sich ein besonders einfacher und kostengünstiger Aufbau ergibt, der darüberhinaus in einfacher Weise eine Anpassung an die jeweilige Geometrie der sich relativ zueinander bewegenden Teile erlaubt.

Dem dient auch, wenn die Leiterplatte eine flexible Platte ist, da eine derartige Platte - insbesondere dann, wenn sie eine spezielle Geometrie, wie beispielsweise Schlitze aufweist - leicht in nahezu beliebige Formen bringbar ist. Die Verwendung einer geschlitzten Leiterplatte ist dagegen bei Streifenleitungen naturgemäß nicht möglich.

Beim Aufbau der erfindungsgemäßen Vorrichtung mit einer Leiterplatte ist es ferner möglich, daß die Kapazitäten als flächige leitende Elemente auf der (flexiblen) Leiterplatte ausgebildet sind. Die flächigen leitenden Elemente können über Stichleitungen mit der durchgehenden Leitung verbunden sein oder direkt an diese seitlich anschließen. Weiterhin ist es möglich, daß beidseits der durchgehenden Leitung flächige leitende Elemente vorgesehen sind.

Insbesondere können auf beiden Seiten der Leiterplatte Leiterstrukturen mit einer Massefläche, Kapazitäten und/oder Induktivitäten vorgesehen sein.

Selbstverständlich ist es auch möglich, daß die Induktivitäten und/oder die Kapazitäten diskrete Elemente sind. Auch eine Kombination von diskreten Elementen und auf einer Leiterplatte realisierten Elementen ist möglich.

Bei einer weiteren Ausgestaltung der Erfindung sind mehrere auf unterschiedliche Frequenzbereiche abgestimmte Koppelelemente räumlich nahe beieinander angeordnet sind, so daß sich eine auf diese Frequenzbereiche abgestimmte Koppelstruktur ergibt. Hierdurch ist sowohl eine breitbandige Übertragung als auch eine mehrkanalige Übertragung in mehreren unabhängigen Frequenzbändern möglich. Dadurch ergibt sich eine Koppelstruktur, die eine selektive Kopplung in diesen vorgegebenen Frequenzbereichen ermöglicht. So kann z.B. in einer Anlage, die in den Frequenzbereichen 100 MHz und 900 MHz arbeitet, eine Kombination aus diskreten Resonanzkreisen für das untere Frequenzband, sowie Leitungsresonatoren für das obere Frequenzband eingesetzt werden. Durch diese Kombination kann eine erhöhte Störunterdrückung im Bereich zwischen diesen beiden Frequenzbändern erreicht werden.

Bei einer weiteren Ausgestaltung der Erfindung werden mehrere Koppelelemente derart kombiniert, daß sich nach außen hin ein vorbestimmtes Strahlungsdiagramm ergibt. Dies kann nach den allgemein bekannten Regeln zur Dimensionierung von Antennen und Strahlergruppen erfolgen. Damit kann die Abstrahlung unerwünschter Energie in Bereiche, die besonders empfindlich sind, minimiert werden.

Die Ausgestaltung, bei der die Koppelelemente als Differenzkoppelelemente ausgebildet sind, und bei der ein Differenzsignal an die Koppelelemente angelegt ist, ermöglicht eine besonders störsichere Signalübertragung.

Hierzu sind mindestens zwei Koppelelemente mit Differenzsignalen aus zwei Differenzsignale führenden Leitungen oder über eine symmetrierende Anpassungsschaltung wie Symmetrierübertrager zu speisen.

Bei der erfindungsgemäßen Vorrichtung können an allen Teilen einander angepaßte, resonanzfähige Koppelelemente vorgesehen sein. Ferner ist es auch möglich, daß lediglich an einem Teil resonanzfähige Koppelelemente vorgesehen sind, und daß an den anderen Teilen als Koppelelemente herkömmliche Sender bzw. Empfänger vorgesehen sind. Beispielsweise können die Sender bzw. Empfänger Spulen, Ferritkerne und/oder Kondensatoren aufweisen.

Weiterhin können die herkömmlichen Koppelelemente als dem Stand der Technik entsprechende Antennen (Strahler) ausgebildet sein. Diese können beispielsweise als planare Antennen in Streifenleitungstechnik oder auch als Stabantennen bzw. Rahmenantennen ausgebildet sein.

Bei einer vorteilhaften Ausgestaltung der Erfindung werden im Falle einer bevorzugten Signalflußrichtung die erfindungsgemäß ausgebildeten Koppelelemente auf der Senderseite und herkömmliche Koppelelemente auf der Empfangsseite angeordnet. Eine solche bevorzugte Signalflußrichtung existiert beispielsweise, wenn genau ein Sender und mindestens ein Empfänger vorhanden sind, oder wenn in genau einer Richtung eine möglichst hohe Übertragungsqualität gefordert ist. Eine Verbindung auf den Pfad erfindungsgemäßes Koppelelement - Koppelelement - Leitungssystem - Koppelelement - erfindungsgemäßes Koppelelement hat die niedrigste Übertragungsqualität. Hier treten zweimal die Koppeldämpfungen des Überganges herkömmliches Koppelelement - erfindungsgemäßes Koppelelement sowie die Verluste im Leitungssystem auf. Besser ist die Verbindung herkömmliches Koppelelement - erfindungsgemäßes Koppelelement - Leitungssystem, da hier die Verluste des Überganges herkömmliches Koppelelement - erfindungsgemäßes Koppelelement nur einmal auftreten. Am besten ist jedoch die Verbindung Leitungssystem - erfindungsgemäßes Koppelelement - herkömmliches Koppelelement, da hier das unverstärkte Signal lediglich die Dämpfung der Strecke Koppelelement - erhöht. So kann das um diesen Dämpfungsfaktor (z. B. 10 dB) abgeschwächte Signal direkt wieder in dem herkömmliches Koppelelement verstärkt werden. Im Leitungssystem wird noch das Originalsignal mit hohem Pegel geführt. Auf dem umgekehrten Signalweg (herkömmliches Koppelelement - erfindungsgemäßes Koppelelement - Leitungssystem) wird das gedämpfte Signal im Leitungssystem geführt, wo es durch andere Signale aufgrund seines niedrigeren Pegels leichter gestört werden kann. Aus dieser Betrachtung ergibt sich, daß die beste Übertragungsgüte eines Signals auf der Strecke Leitungssystem - erfindungsgemäßes Koppelelement - herkömmliches Koppelelement erreicht werden kann.

Bei der erfindungsgemäßen Vorrichtung ist es weiterhin von Vorteil, wenn zur Einspeisung der zu übertragenden Signale bzw. der Energie bzw. zur Weiterleitung der übertragenen Signale bzw. Energie dienenden Leitungssysteme geschirmt und damit von den Koppelelementen entkoppelt ausgeführt sind, so daß die Abstrahlung über die Zuleitungssysteme und die Aufnahme von Störenergie minimiert wird. Erfindungsgemäß genügt eine Ausgestaltung der Vorichtung derart, daß die Koppelelemente den überwiegenden Anteil an der Kopplung besitzen. Eine geringe restliche Verkoppelung der beweglichen Koppeleinrichtungen mit dem Leitungssystem ist in der Regel nicht schädlich. Dennoch kann es in bestimmten Fällen sinnvoll sein, die Leitung vollständig zu schirmen. Dies ist insbesondere dann der Fall, wenn nur eine schmalbandige Einkopplung in die Leitung erwünscht ist und in der Umgebung breitbandig hohe Störpegel auftreten.

Ferner ist es möglich, wenigstens eine Aktivierungseinheit vorzusehen, die erst bei Annäherung der Koppelelemente eines relativ bewegten Teil das jeweilige Koppelelement an dem Teil aktiviert, an den sich der relativ bewegte Teil annähert.

Bei einer weiteren vorteilhaften Ausgestaltung der Erfindung wird der Arbeitsbereich der Koppelemente an die Übertragungsaufgabe angepaßt. Im Falle von Resonatoren als Koppelelemente können diese so dimensioniert werden, daß sie erst bei Annäherung von an einem relativ bewegten Teil vorgesehenen Koppelelementen mit bestimmten dielektrischen oder magnetischen Eigenschaften ihre Soll-Resonanzfrequenz erhalten. Damit wird erreicht, daß erst bei Annäherung dieser Koppelelemente Energie abgegeben wird.

Sind die Koppelelemente weiter entfernt, so ist beispielhaft im Falle eines Resonators der Resonator verstimmt, strahlt keine Energie ab und belastet das Leitungssystem nicht. Ebenso kann ein verstimmter Resonator keine Energie bei seiner Arbeitsfrequenz in das Leitungssystem einkoppeln. Weiterhin können die Koppelelemente derart gestaltet werden, daß sie sich bei Annäherung unterschiedlicher Koppeleinrichtungen auf unterschiedliche Arbeitsbereiche abstimmen lassen. So können an einem relativ bewegten Teil vorgesehene Koppelelemente mit unterschiedlichen Dielektrizitätskonstanten die Koppelelemente auf unterschiedliche Arbeitsfrequenzen abstimmen.

In einer weiteren vorteilhaften Ausgestaltung der Erfindung besitzen die Koppelelemente eine Aktivierungseinrichtung, welche die Annäherung einer Koppeleinrichtung feststellt und im Falle einer Annäherung das jeweilige Koppelement aktiviert.

In einer weiteren Ausgestaltung der Erfindung werden die Koppelelemente durch zusätzliche aktive oder passive Bauteile mit dem Leitungssystem verkoppelt. Solche Bauteile können Halbleiter als Schalter oder auch Verstärker sein, die den Signalfluß steuern und/oder auch den Signalpegel anheben. Passive Bauteile zur Kopplung können Richtkoppler sein, die z.B. im Falle einer unidirektionalen Übertragung vom Leitungssystem den Signalfluß in die Koppelelemente zulassen, aber von außen durch die Koppelelemente eingekoppelte Störungen vom Leitungssystem fernhalten. Dies gilt auch für den Fall, daß Koppelelemente als Richtkoppler ausgeführt sind. Selbstverständlich können zur Entkopplung auch nichtreziproke Bauelemente wie Zirkulatoren eingesetzt werden.

In einer weiteren Ausgestaltung der Erfindung werden unterschiedliche Arten von Koppelelementen miteinander kombiniert. So kann z.B. an einer Stelle des Systems eine breitbandige Übertragung mit kapazitiven Koppelelementen und andernorts in einem gestörten Umfeld eine schmalbandige Übertragung mit Resonatoren erforderlich sein.

Ferner ist es möglich, daß die Koppelelemente durch einen Schirm aus elektrisch leitfähigem Material geschirmt werden. Dieser Schirm kann die Koppelelemente mit oder auch ohne das Leitungssystem oder Teile davon umfassen. Der Schirm hat seine beste Wirkung, wenn er die Koppelelemente möglichst weit umschließt.

Eine zu einem Resonanzkreis ergänzte induktive oder kapazitive Übertragungseinrichtung besitzt ihre optimalen Übertragungseigenschaften ausschließlich im Punkte der Resonanzfrequenz. Daher wird erfindungsgemäß die Schaltung zu einem Leistungsoszillator ergänzt, in dem der zur Übertragung verwendete Resonanzkreis das frequenzbestimmende Schaltungselement ist. Dabei spielt es keine Rolle, ob es sich bei dem Resonanzkreis des Übertragungselements um einen Serien- oder Parallelkreis handelt. Es kann auch durch weitere zusätzliche Blindelemente zu einem mehrkreisigen, resonanzfähigen System ausgebildet werden. Wesentlich ist, daß das Übertragungssystem derart gestaltet ist, daß es durch Mitkopplung zur Oszillation bei mindestens einer Resonanzfrequenz des Systems, bei der eine Energieübertragung möglich ist, zur Oszillation angeregt werden kann.

Die Anordnung besteht aus einem verstärkenden Element, welches die resonante Übertragungseinrichtung speist. Eine Signalisierungseinrichtung ermittelt aus Strömen und Spannungen der Resonanzelemente ein Signal, welches zumindest eine Phaseninformation enthält und signalisiert diese dem verstärkenden Element. Um ein schwingfähiges Gebilde zu erhalten, ist in dieser Anordnung eine schaltende oder verstärkende Komponente notwendig, mit einer derartigen Verstärkung, daß die Schwingbedingung (siehe Tietze, Schenk, Halbleiterschaltungstechnik, Springer Verlag, 10. Auflage, S. 459) erfüllt ist. Ob die schaltende oder verstärkende Komponente hier als reiner Halbleiterschalter oder als lineares Verstärkungselement ausgeführt ist, hat keinen Einfluß auf die Funktion der erfindungsgemäßen Anordnung. Daher wird im weiteren Text auch nicht zwischen Schalter und Verstärker unterschieden.

In einer besonders vorteilhaftn Ausgestaltung der Erfindung enthält im Falle einer Serienresonanz die Signalisierungseinrichtung einen Stromabgriff, der einen vorgegebenen Anteil des Resonanzstromes auskoppelt. Dieser Stromabgriff kann beispielsweise ein Strommeßwiderstand, ein Stromübertrager oder ein Hall-Element sein. Ebenso kann der Resonanzstrom als Spannungsabfall an einem der Resonanzelemente gemessen werden.

In einer weiteren vorteilhaften Ausgestaltung der Erfindung enthält die Signalisierungseinrichtung im Falle der Parallelresonanz Komponenten zur Auskopplung eines vorgegebenen Anteils der am Parallelresonanzkreis anliegenden Spannungen. Diese Spannungen können auch indirekt über den Strom durch diese Elemente ermittelt werden.

In einer weiteren vorteilhaften Ausgestaltung der Erfindung enthält die Signalisierungseinrichtung im Falle eines mehrkreisigen Resonanzsystems Komponenten zur Ermittlung der Kombination eines vorgegebenen Anteils mindestens einer Parallelresonanzspannung bzw. eines vorgegebenen Anteils mindestens eines Serienresonanzstromes. Dabei kann die Signalisierungseinrichtung derart ausgeführt sein, daß die Auswertung durch einfache, phasenrichtige Addition dieser Größen erfolgt. Dadurch ist es möglich, je nach Belastungsfall die Schaltung auf einer Serien- oder Parallelresonanz arbeiten zu lassen. Alternativ ist auch eine Umschaltung realsierbar, welche erkennt, ob eine Serien- oder Parallelresonanz vorliegt und entsprechend einen Anteil von Resonanzspannung bzw. Resonanzstrom ermittelt.

In einer weiteren vorteilhaften Ausgestaltung der Erfindung enthält die Signalisierungseinrichtung Filterelemente zur Vorselektion zwischen den Abgriffen von Resonanzspannung bzw. -strom.

In einer weiteren vorteilhaften Ausgestaltung der Erfindung enthält die Signalisierungseinrichtung einen Hilfsoszillator, welcher ein Anschwingen der Anordnung beim Einschalten der Versorgungsspannung erleichtert. Beim Einschalten der Versorgungsspannung beginnt ein Oszillator üblicherweise aus dem Rauschen heraus mit der Oszillation. Um ein sicheres und schnelles Anschwingen zu gewährleisten, kann ein solcher Oszillator auch ein Startsignal mit einer vorgegebenen Frequenz erhalten. Wird diese Frequenz in der Nähe der gewünschten Arbeitsfrequenz gewählt, erfolgt das Anschwingen besonders schnell. Durch die Vorgabe des Startsignals kann auch bei mehreren möglichen Resonanzen die Oszillation auf der gewünschten Resonanzfrequenz erfolgen. Würde in einem solchen Fall der Oszillatorstart aus dem Rauschen heraus erfolgen, so kann der Leistungsoszillator auch auf nicht erwünschten Resonanzfrequenzen anschwingen.

In einer weiteren vorteilhaften Ausgestaltung der Erfindung ist eine weitere Auswerteeinheit vorhanden, welche die Arbeitsfrequenz der Schaltung selbst zur Ermittlung des Abstandes zwischen den gegeneinander beweglichen Teilen verwendet. Da sich die Arbeitsfrequenz im Falle einer induktiven Übertragung bzw. einer kapazitiven Übertragung abhängig vom Abstand der -gegeneinander beweglichen Elemente verändert, kann aus einer Änderung der Arbeitsfrequenz problemlos die entsprechende Änderung des Abstandes ermittelt werden.

### Kurze Beschreibung der Zeichnung

Die Erfindung wird nachstehend anhand der Zeichnungen näher beschrieben, in der zeigen:
- Fig. 1a bis 1c: den prinzipiellen Aufbau erfindungsge mäßer Vorrichtungen zur kontaktlosen Übertragung elektrischer Signale und/oder Energie,
- Fig. 2: ein erstes Ausführungsbeispiel der Erfindung mit kapazitiver Kopplung,
- Fig. 3: eine Abwandlung des in Fig. 2 gezeigten Ausführungsbeispiels mit symmetrische Anordnung mit Schirm,
- Fig. 4: ein zweites Ausführungsbeispiel mit induktiver Koppelung,
- Fig. 5: eine erfindungsgemäße Vorrichtung an einem Drehübertrager
- Fig. 6a und 6b: einen Vergleich zwischen einer Vorrichtung nach dem Stand der Technik und einer erfindungsgemäßen Vorrichtung bei der Differenzsignal-Übertragung,
- Fig. 7a und 7b: Darstellungen zur Erläuterung der Tiefpaß-Charakteristik, und
- Fig. 8 bis 11: verschiedene Beispiele für die ResonanzKopplung.

### Darstellung von Ausführungsbeispielen

In den folgenden Figuren sind gleiche bzw. gleich wirkende Elemente mit den selben Bezugszeichen versehen, so daß z.T. auf eine erneute Vorstellung verzichtet wird.

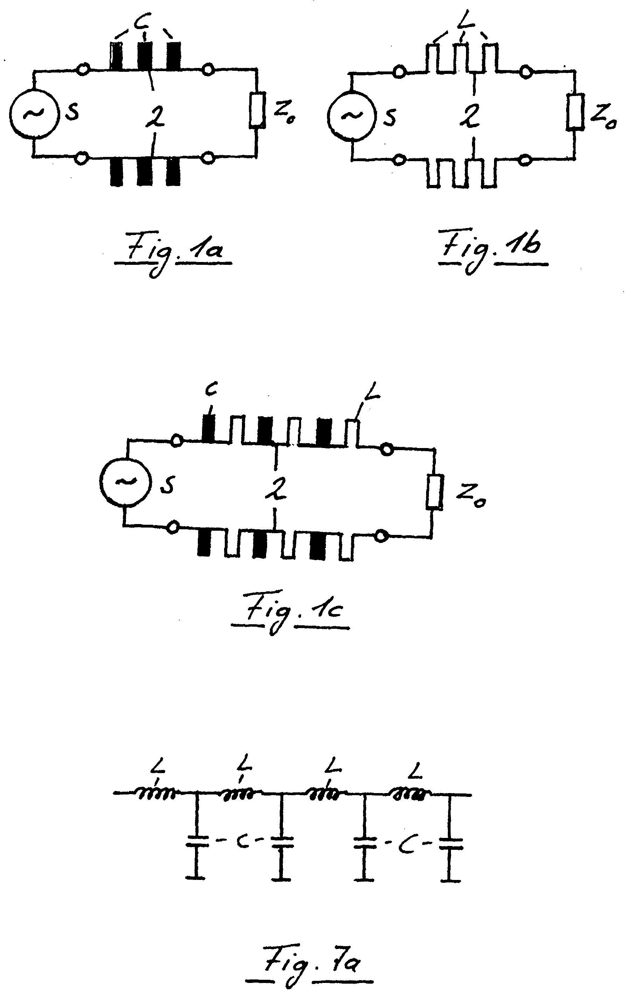

Die Fig. 1a bis 1c zeigen verschiedene Ausführungsformen der erfindungsgemäßen Vorrichtung zur kontaktlosen Übertragung elektrischer Signale und/oder Energie, wobei in den Figuren lediglich der Sender, und nicht der Empfänger dargestellt ist:

Eine Signalquelle S ist über eine Leiterstruktur 2 mit Koppelelementen C bzw. L verbunden und weiterhin mit einem Wellenwiderstand Z₀ reflexionsfrei abgeschlossen. Im Falle der Verwendung einer erfindungsgemäß aufgebauten Einheit als Empfänger wird an der Stelle der Signalquelle S das übertragene Signal abgegriffen. Die hier gezeigten Anordnungen sind symmetrisch ausgebildet, da es sich hierbei um eine besonders vorteilhafte Ausführungsform handelt. Selbstverständlich sind auch unsymmetrische Ausführungsformen möglich.

Fig. 1a zeigt ein Beispiel für die kapazitive Kopplung; hierbei sind an einem durchgehenden Leiter 2 über eine Stichleitung oder direkt wie bei dem gezeigten Ausführungsbeispiel flächige leitende Elemente C angesetzt, die die kapazitive Kopplung bewirken.

Fig. 1b zeigt ein Beispiel für die induktive Kopplung; hierbei bildet die Leiterstruktur 2 Schleifen und damit diskrete Elemente L, die die induktive Kopplung bewirken.

Fig. 1c zeigt ein Beispiel für die induktive und kapazitive Kopplung; hierbei sind sowohl Leiterschleifen L als auch flächige leitende Elemente C vorgesehen.

Die Erfindung wird nachstehend anhand der weiteren Figuren näher erläutert.

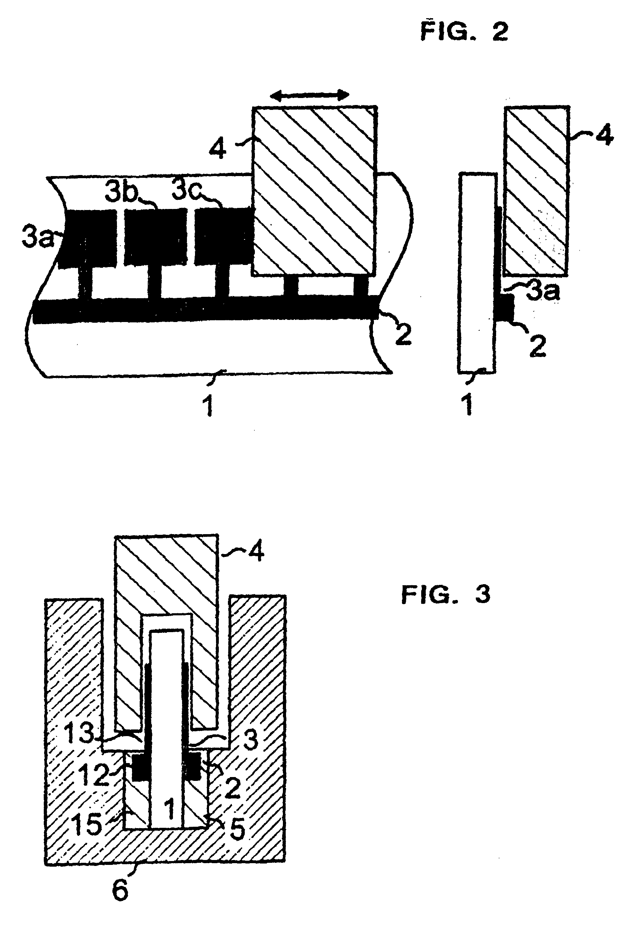

Figur 2 zeigt ein Ausführungsbeispiel mit kapazitiver Kopplung in unsymmetrischer Ausführung. Auf einem Träger 1, beispielsweise einer Leiterplatte, die insbesondere flexibel ausgebildet sein kann, befindet sich eine Leiterstruktur bzw. ein Leitungsnetz 2, das die kapazitiven Koppelelemente 3a, 3b und 3c miteinander verbindet.

Die Übertragung elektrischer Signale und/oder Energie erfolgt mittels dieser Koppelelemente und einer relativ zu diesen Koppelelementen bewegbaren Koppeleinrichtung 4, die als Empfänger dient. Bei der Koppeleinrichtung 4 kann es sich selbstverständlich um gleichartig ausgebildete Elemente, aber auch um herkömmliche Empfänger handeln. Bei dem gezeigten Ausführungsbeispiel - hierzu wird auf die Seitenansicht in Fig. 2 verwiesen - ist die Koppeleinrichtung 4 ein herkömmlicher Empfänger, der seitlich neben den Koppelelementen 3a bis 3c angeordnet ist. Auf der Rückseite der Leiterplatte kann optional eine Massefläche vorgesehen sein.

Fig. 3 zeigt in einem Querschnitt eine Abwandlung des in Fig. 2 gezeigten Ausführungsbeispiels, bei dem eine symmetrische Anordnung mit einer Schirmung vorgesehen ist. Die Vorrichtung weist ein symmetrisches Leitungssystem bzw. eine symmetrische Leitungsstruktur, bestehend aus einem ersten Leiter 2 und einem zweiten Leiter 12, auf. Diese speisen kapazitive Koppelelemente 3 und 13.

Die Koppeleinrichtung 4 ist hier als symmetrische Koppeleinrichtung ausgeführt, die die Leiterplatte 1, auf der die Leiterstrukturen und die Koppelelemente angeordnet sind, U-förmig umgibt. Ferner ist ein Schirm 6 vorgesehen, der die gesamte Anordnung umgibt. Der Träger 1, der wiederum eine Leiterplatte sein kann, ist dabei mittels Isolatoren 5 und 15 an dem Schirm 6 befestigt.

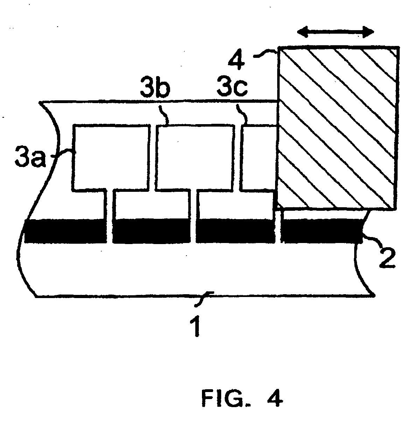

Figur 4 zeigt ein zweites Ausführungsbeispiel der Erfindung, bei dem eine induktive Kopplung erfolgt. Auf einem Träger 1, welcher auch auf der Rückseite mit einer elektrisch leitfähigen Schicht versehen sein kann, ist wiederum eine Leiterstruktur 2 vorgesehen, die induktive Koppelelemente 3a bis 3c verbindet. Die Koppelelemente 3a bis 3c sind hierbei in Art einer Leiterschleife ausgebildet. Mit 4 ist wieder eine Koppeleinrichtung herkömmlicher Art bezeichnet.

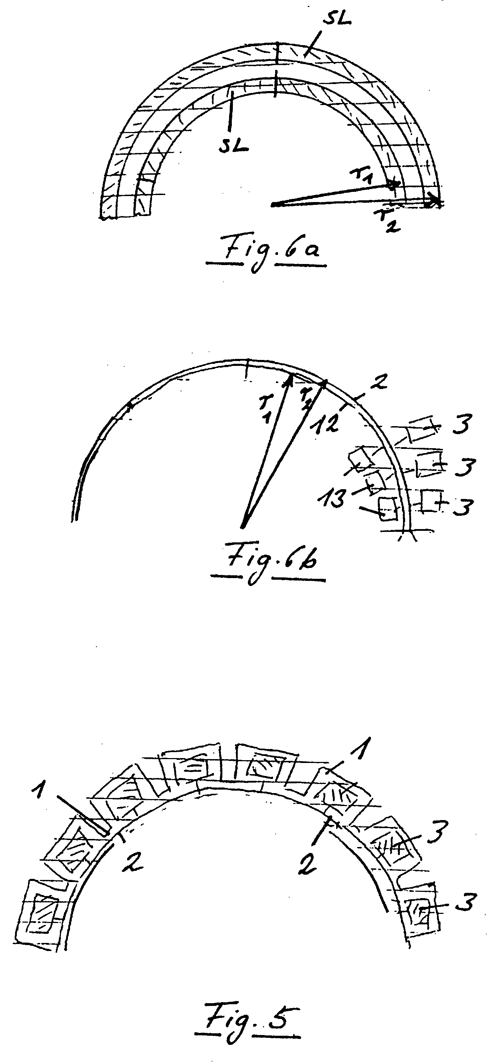

Die vorstehend anhand der Fig. 1 bis 4 beispielhaft erläuterte erfindungsgemäße Vorrichtung hat eine Reihe von Vorteilen, die nachstehend anhand der Fig. 5 bis 7 näher erläutert werden:

Fig. 5 zeigt ein Ausführungsbeispiel, bei dem die erfindungsgemäße Vorrichtung so ausgebildet ist, daß sie beispielsweise an einem Drehübertrager angebracht werden kann. Die erfindungsgemäß ausgebildete Leiterstruktur 2 mit kapazitiven Elementen 3 (und/oder induktiven Elementen) kann dabei aus einer ebenen Folie oder Leiterplatte 1 gefertigt werden, in die Schlitze eingebracht werden, die ein Biegen auf kleine Radien ermöglicht. Mit einer Streifenleitung, wie sie beim Stand der Technik verwendet wird, wäre dies nicht möglich.

Darüberhinaus hat die erfindungsgemäße Vorrichtung den Vorteil, daß sich bei einer gebogenen Anordnung und einer Differenzsignal-Kopplung nur gering unterschiedliche Leitungslängen ergeben, die zu einer Laufzeitdifferenz und damit zu Signalstörungen und zu unerwünschter Abstrahlung führen. Damit eignet sich die erfindungsgemäße Vorrichtung besonders für die Differenzsignal-Übertragung, die wiederum den Vorteil hat, daß die Abstrahlung nach außen aufgrund der sich im Außenraum praktisch vollständig kompensierenden Felder minimiert ist.

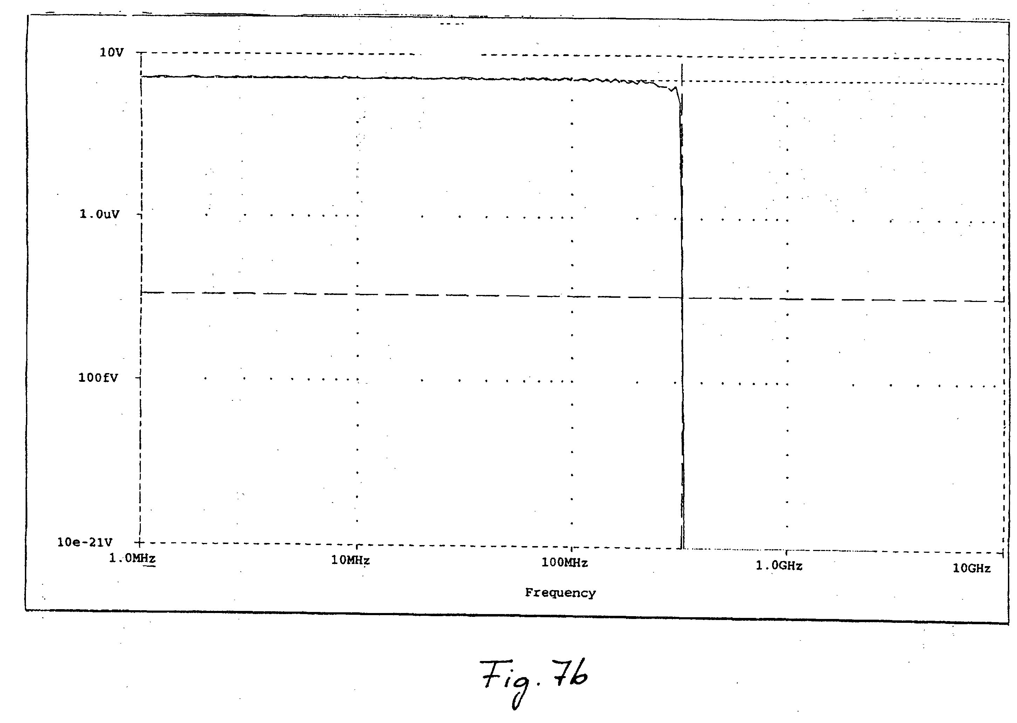

Fig. 6 zeigt einen Vergleich zwischen als Differenzstruktur ausgebildeten herkömmlichen Streifenleitungen SL (Teilbild a) und einer erfindungsgemäßen Vorrichtung (Teilbild b).

Wie die Figuren 6a und 6b zeigen, sind im Falle einer erfindungsgemäßen Vorrichtung die Leitungen 2 und 12 mit Koppelelementen 3 und 13sehr nahe beieinander, so daß die Differenz ihrer Radien r₁ und r₂ sehr klein ist. Damit ist auch der Längenunterschied und somit die Laufzeitdifferenz minimiert.

Im Falle der Streifenleitungen SL ist jedoch die Differenz der Radien r₁ und r₂ und damit auch die Laufzeitdifferenz vergleichsweise groß.

Fig. 7a zeigt ein vereinfachtes elektrisches Ersatzschaltbild einer erfindungsgemäßen Vorrichtung. Wie Fig. 7a zeigt, hat die erfindungsgemäße Vorrichtung eine Tiefpaßcharakteristik. Damit hat die erfindungsgemäße Vorrichtung den Vorteil hoher Störfestigkeit, da Störungen oberhalb der Grenzfrequenz nicht weitergeleitet und damit weder empfangen noch ausgesandt werden können.

Den berechneten Frequenzgang einer erfindungsgemäßen Vorrichtung zeigt beispielhaft Fig. 7b, in der auf der Abszisse die Frequenz (in MHz) und auf der Ordinate das empfangene Signal (in V) aufgetragenen sind. Wie man sieht, hat die erfindungsgemäße Vorrichtung bei dem gezeigten Ausführungsbeispiel zwischen 1 MHz und nahezu 300 MHz einen praktisch konstanten Frequenzgang, der bei ca. 300 MHz steil auf "Null" abfällt. Selbstverständlich sind auch andere - höhere oder niedrigere - Grenzfrequenzen als 300 MHz realisierbar.

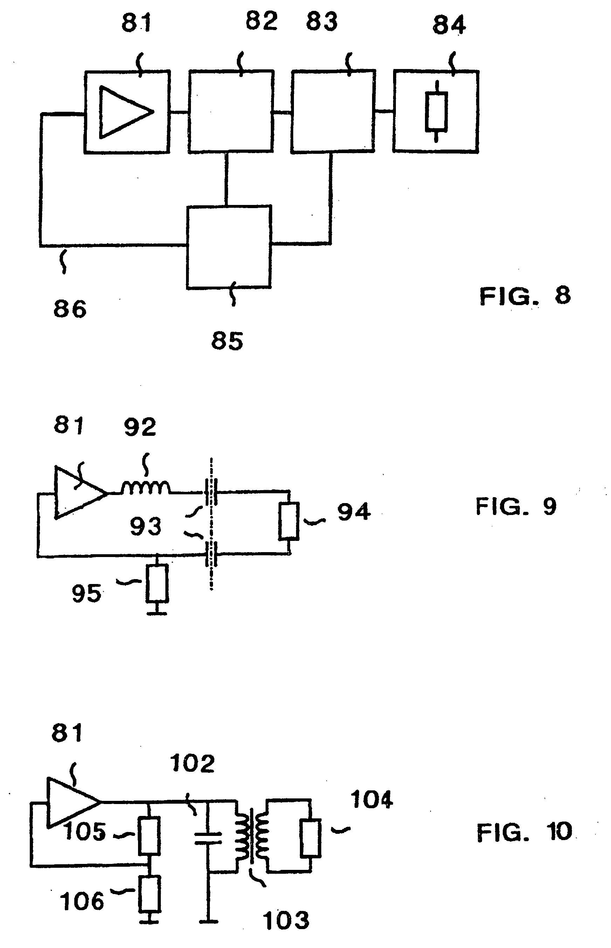

Fig. 8 zeigt eine erfindungsgemäße Anordnung mit Resonanzkopplung, bestehend aus einem induktiven bzw. kapazitiven Koppelelement 83, welches eine Last 84 speist. Dieses Koppelelement wird durch zumindest ein Blindelement 82 zu einem resonanzfähigen Gebilde ergänzt. Die Signalisierungseinrichtung 85 bildet aus Resonanzströmen bzw. -Spannungen am Koppelelement bzw. an den ergänzenden Blindelementen ein Mitkopplungssignal mit einer Amplitude und Phase derart, daß das schaltende bzw. verstärkende Element 81, zusammen mit den ihm nachgeschalteten Blindelementen 82 und 83, die Schwingbedingung erfüllt.

Fig. 9 zeigt eine beispielhafte Anordnung entsprechend der Erfindung im Falle einer kapazitiven Übertragungseinrichtung. Das kapazitive Koppelelement 93 speist die Last 94. Es wird zu einem resonanzfähigen Gebilde ergänzt durch die Induktivität 92. Die Signalisierungseinrichtung besteht hier aus einem Strommeßwiderstand 95, welcher an die schaltende oder verstärkende Komponente 91 ein Signal proportional zum Serienresonanzstrom durch Induktivität und Kapazität übermittelt.

Fig. 10 zeigt beispielhaft eine besonders einfache Ausführungsform einer erfindungsgemäßen Anordnung im Falle einer Parallelresonanz an einem induktiven Koppelelement. Das induktive Koppelelement 103 speist hier eine Last 104. Die Induktivität wird durch die Kapazität 102 zu einem Parallelresonanzkreis ergänzt. Diese Signalisierungseinrichtung besteht hier aus einem Spannungsteiler mit den beiden Widerständen 105 und 106, welche einen vorgegebenen Anteil der Parallelresonanzspannung an Induktivität und Kapazität abgreift und diese an die schaltende bzw. verstärkende Komponente weiterleitet.

Vorstehend ist die Erfindung anhand von Ausführungsbeispielen ohne Beschränkung des allgemeinen Erfindungsgedankens und der allgemeinen Anwendbarkeit beschrieben worden. Insbesondere ist es möglich, die Erfindung nicht nur für Drehübertrager, wie beispielsweise in Computertomographen, Radartürmen, sondern auch für linear bewegliche Übertrager einzusetzen, wie sie in Kränen etc. benötigt werden. Auch kann die Erfindung bei Übertragern eingesetzt werden, die eine zusammengesetzte Bewegung ausführen.

## Patentansprüche

1. Vorrichtung zur kontaktlosen Übertragung elektrischer Signale zwischen wenigstens zwei relativ zueinander beweglichen Teilen, bei der an den Teilen, zwischen denen Signale und/oder Energie übertragen werden soll, eine Vielzahl elektromagnetischer Koppelelemente vorgesehen sind, deren Nahfeld die kontaktlose Übertragung bewirkt, wobei an wenigstens einem Teil die Koppelelemente in der nachfolgend angegebenen Weise ausgebildet sind:
- jedes Koppelelement (3a, 3b, 3c) bildet wenigstens einen von anderen Koppelelementen unabhängigen Resonator, dessen Resonanzfrequenz in etwa gleich der Frequenz der zu übertragenden Signale ist,
- die einzelnen Koppelelemente (3a,3b,3c) sind über eine Leitung (2) oder eine Leiterstruktur (2) miteinander verbunden und an den anderen Teilen sind gleichartig ausgebildete Koppelelemente und/oder in an sich bekannter Weise ausgebildete Koppelelemente vorgesehen,
**dadurch gekennzeichnet,daß** das aus Leitung oder Leiterstruktur und Koppelelementen bestehende Gesamtsystem an dem wenigstens einen Teil reflexionsfrei abgeschlossen ist.

2. Vorrichtung nach Anspruch 1,
**dadurch gekennzeichnet, daß** der oder die Resonatoren Hohlraum-Resonatoren, Leitungsresonatoren, dielektrische, ferrimagnetische und/oder piezoefektrische Resonatoren sind.

3. Vorrichtung zur kontaktlosen Übertragung elektrischer Signale und/oder Energie zwischen wenigstens zwei relativ zueinander beweglichen Teilen; bei der an den Teilen, zwischen denen Signale und/oder Energie übertragen werden soll, eine Vielzahl definierter elektromagnetischer Koppelelemente (83) vorgesehen sind, deren Nahfeld die kontaktlose Übertragung bewirkt,
**dadurch gekennzeichnet, daß** durch die Koppelelemente (93; 103) und entsprechende Blindelemente (92; 102) gebildete Resonatoren an wenigstens einem Teil
- eine als Kaskadenschaltung ausgebildete Leiterstruktur bilden, die reflexionsfrei abgeschlossen ist, und
- daß jede kaskadenförmige Resonatoranordnung unabhängig von den anderen Resonatoranordnungen an diesem Teil damit ein Resonanzsystem mit einer Resonanzfrequenz bildet, die größer als die größte Frequenz der zu übertragenden breitbandigen Signale ist.

4. Vorrichtung nach Anspruch 3,
**dadurch gekennzeichnet, daß** das von den Resonatoren gebildete System eine Tiefpaßcharakteristik hat.

5. Vorrichtung nach Anspruch 3 oder 4,
**dadurch gekennzeichnet, daß** die Leiterstruktur als Gesamtheit nicht resonanzfähig ist.

6. Vorrichtung nach einem der Ansprüche 2 bis 5,
**dadurch gekennzeichnet, daß** jeder Resonator aus einem Glied besteht, das wenigstens einen induktiv und kapazitiv wirkenden Bestandteil enthält, und
daß der nachfolgende Resonator als Eingangssignal die Spannung bzw. den Strom an wenigstens einem Blindelement des vorigen Resonators abgreift.

7. Vorrichtung nach Anspruch 6,
**dadurch gekennzeichnet, daß** jeder Resonator aus wenigstens einer, bevorzugt einer einzigen, Induktivität und wenigstens einer Kapazität besteht.

8. Vorrichtung nach Anspruch 7,
**dadurch gekennzeichnet, daß** die einzelnen Induktivitäten der verschiedenen Resonatoren eines Teils in Reihe geschaltet sind.

9. Vorrichtung nach Anspruch 7 oder 8,
**dadurch gekennzeichnet, daß** eine durchgehende Leitung die einzelnen Induktivitäten der jeweiligen Resonatoren bildet.

10. Vorrichtung nach Anspruch 9,
**dadurch gekennzeichnet, daß** die Kapazitäten als flächige leitende Elemente ausgebildet sind, die über Stichleitungen mit der durchgehenden Leitung verbunden sind oder direkt an diese seitlich anschließen.

11. Vorrichtung nach Anspruch 10,
**dadurch gekennzeichnet, daß** beidseits der durchgehenden Leitung flächige leitende Elemente vorgesehen sind.

12. Vorrichtung nach einem der Ansprüche 6 bis 11,
**dadurch gekennzeichnet, daß** die Induktivitäten bzw. Kapazitäten als Strukturen einer Leiterplatte ausgebildet sind.

13. Vorrichtung nach Anspruch 12,
**dadurch gekennzeichnet, daß** die Leiterplatte eine flexible Platte ist.

14. Vorrichtung nach Anspruch 13,
**dadurch gekennzeichnet, daß** die Leiterplatte Schlitze aufweist.

15. Vorrichtung nach einem der Ansprüche 6 bis 14,
**dadurch gekennzeichnet, daß** die Induktivitäten und/oder die Kapazitäten diskrete Elemente sind.

16. Vorrichtung nach einem der Ansprüche 1 bis 15,
**dadurch gekennzeichnet, daß** mehrere auf unterschiedliche Frequenzbereiche abgestimmte Resonatoren mit Koppelelementen räumlich nahe beieinander angeordnet sind, so daß sich eine auf diese Frequenzbereiche abgestimmte Resonatorstruktur ergibt.

17. Vorrichtung nach einem der Ansprüche 1 bis 16,
**dadurch gekennzeichnet, daß** der Aufbau symmetrisch ist.

18. Vorrichtung nach einem der Ansprüche 1 bis 17,
**dadurch gekennzeichnet, daß** auf beiden Seiten einer Leiterplatte Leiterstrukturen mit einer Massefläche, Kapazitäten und/oder Induktivitäten vorgesehen sind.

19. Vorrichtung nach einem der Ansprüche 1 bis 18,
**dadurch gekennzeichnet, daß** die Resonatoren als Differenzresonatoren ausgebildet sind und
daß ein Differenzsignal an die Resonatoren angelegt ist.

20. Vorrichtung nach einem der Ansprüche 1 bis 19,
**dadurch gekennzeichnet, daß** an allen Teilen einander angepaßte Resonatoren vorgesehen sind.

21. Vorrichtung nach einem der Ansprüche 1 bis 20,
**dadurch gekennzeichnet, daß** lediglich an einem Teil Resonatoren vorgesehen sind, und
daß an den anderen Teilen als Resonatoren herkömmliche Sender bzw. Empfänger vorgesehen sind.

22. Vorrichtung nach Anspruch 21,
**dadurch gekennzeichnet, daß** die Sender bzw. Empfänger Spulen, Ferritkerne und/oder Kondensatoren aufweisen.

23. Vorrichtung nach einem der Ansprüche 1 bis 22,
**dadurch gekennzeichnet, daß** die zur Einspeisung der zu übertragenden Signale bzw. der Energie bzw. zur Weiterleitung der übertragenen Signale bzw. Energie dienenden Leitungssysteme geschirmt und damit von den Resonatoren entkoppelt ausgeführt sind.

24. Vorrichtung nach einem der Ansprüche 1 bis 23,
**dadurch gekennzeichnet, daß** wenigstens eine Aktivierungseinheit vorgesehen ist, die erst bei Annäherung der Resonatoren eines relativ bewegten Teils den jeweiligen Resonator aktiviert.

25. Vorrichtung nach einem der Ansprüche 1 bis 24,
**dadurch gekennzeichnet, daß** die Resonatoren derart gestaltet sind, daß sie sich in ihren elektrischen Eigenschaften erst durch die dielektrischen oder magnetischen Eigenschaften eines sich annähernden Resonators an ihren Arbeitspunkt anpassen.

26. Vorrichtung nach einem der Ansprüche 1 bis 25,
**dadurch gekennzeichnet, daß** die Kopplung der Resonatoren durch zusätzliche aktive oder passive Bauelemente wie beispielsweise Verstärker und/oder Halbleiterschalter zum Leitungssystem erfolgt.

27. Vorrichtung nach einem der Ansprüche 1 bis 26,
**dadurch gekennzeichnet, daß** die Resonatoren durch einen Schirm aus elektrisch leitfähigem Material von der Umgebung abgeschirmt sind.

28. Vorrichtung nach einem der Ansprüche 1 bis 27,
**dadurch gekennzeichnet, daß** die Resonatoren von einem schaltenden bzw. verstärkenden Element gespeist werden.

29. Vorrichtung nach Anspruch 28,
**dadurch gekennzeichnet, daß** eine zusätzliche Signalisierungseinrichtung vorhanden ist, die aus Spannungen und Strömen der resonanten Elemente ein Mitkoppelsignal für das schaltende bzw. verstarkende Element derart erzeugt, daß eine Oszillation auf zumindest einer Resonanzfrequenz erfolgt.

30. Vorrichtung nach Anspruch 29,
**dadurch gekennzeichnet, daß** die Signalisierungseinrichtung derart gestaltet ist, daß sie eine Größe proportional zu einem Teil eines Serienresonanzstroms auskoppelt.

31. Vorrichtung nach Anspruch 29,
**dadurch gekennzeichnet, daß** die Signalisierungseinrichtung derart gestaltet ist, daß sie eine Größe proportional zu einem Teil einer Paralletresonanzspannung auskoppelt.

32. Vorrichtung nach Anspruch 29,
**dadurch gekennzeichnet, daß** im Falle mehrerer Resonanzen die Signalisierungseinrichtung derart gestaltet ist, daß sie ein kombiniertes Signal, bestehend aus einer Größe proportional zu einem Serienresonanzstrom und proportional zu einer Parallelresonanzspannung auskoppelt.

33. Vorrichtung nach einem der Ansprüche 29 bis 32,
**dadurch gekennzeichnet, daß** ein zusätzlicher Hilfsoszillator vorgesehen ist, der das Anschwingen der Schaltung erleichtert.

34. Vorrichtung nach einem der Ansprüche 29 bis 33,
**dadurch gekennzeichnet, daß** eine Auswerteeinrichtung vorhanden ist, welche die Arbeitsfrequenz der Anordnung ermittelt und daraus ein Signal, entsprechend der Größe des Abstandes der gegeneinander beweglichen Einheiten ableitet.

35. Vorrichtung nach einem der Ansprüche 1 bis 34,
**dadurch gekennzeichnet, daß** die relativ zueinander beweglichen Teilen eine rotatorische Bewegung ausführen.

36. Vorrichtung nach einem der Ansprüche 1 bis 35,
**dadurch gekennzeichnet, daß** die relativ zueinander beweglichen Teilen eine translatorische Bewegung ausführen.

## Claims

1. Device for the non-contacting transmission of electric signals between at least two parts mobile relative to each other, wherein a plurality of electromagnetic coupler elements is provided on those parts between which signals and/or energy are to be transmitted, with the near field of said elements effecting the non-contacting transmission, wherein said coupler elements are formed on at least one part in the manner defined below:
- each coupler element (3a, 3b, 3c) constitutes at least one resonator independent of other coupler elements, whose resonance frequency is approximately equal to the frequency of the signals to be transmitted;
- the individual coupler elements (3a, 3b, 3c) are connected to each other via a line (2) or a conductor structure (2), and coupler elements of a similar configuration and/or coupler elements configured in a manner known per se are provided on the other parts,
**characterised in that** the overall system consisting of said line or conductor structure and said coupler elements is terminated in a reflection-free manner on said at least one part.

2. Device according to Claim 1,
**characterised in that** said resonator or resonators are cavity resonators, waveguide resonators, dielectric, ferrimagnetic and/or piezoelectric resonators.

3. Device for the non-contacting transmission of electric signals and/or energy between at least two parts mobile relative to each other, wherein a plurality of defined electromagnetic coupler elements (83) is provided on those parts between which signals and/or energy are to be transmitted, with the near field of said elements effecting the non-contacting transmission,
**characterised in that** resonators formed by said coupler elements (93; 103) and corresponding reactive elements (92; 102) form a conductor structure on at least one part, which structure is configured as cascade connection and is terminated in a reflection-free manner, and
that independently of the other resonator arrangements on this part, each resonator arrangement in cascade connection cooperates with this part to form a resonance system with a resonance frequency that is higher than the maximum frequency of the wide-band signals to be transmitted.

4. Device according to Claim 3,
**characterised in that** the system formed by said resonators presents a lowpass characteristic.

5. Device according to Claim 3 or 4,
**characterised in that** said conductor structure in its entirety is not capable of resonating.

6. Device according to any of the Claims 2 to 5,
**characterised in that** each resonator consists of an element including at least one component creating an inductive and capacitive effect, and
that the joining resonator picks up the voltage or the current on at least one reactive element of the previous resonator as its input signal.

7. Device according to Claim 6,
**characterised in that** each resonator consists of at least one, preferably a single, inductor and at least one capacitor.

8. Device according to Claim 7,
**characterised in that** the individual inductors of the various resonators of one part are connected in series.

9. Device according to Claim 7 or 8,
**characterised in that** a continuous line constitutes the individual inductors of the respective resonators.

10. Device according to Claim 9,
**characterised in that** the capacitors are configured as flat conductive elements connected via branch lines to said continuous line or directly on the lateral sides thereof.

11. Device according to Claim 10,
**characterised in that** flat conductive elements are provided on both sides of said continuous line.

12. Device according to any of the Claims 6 to 11,
**characterised in that** said inductors or capacitors, respectively, are configured as structures of a pc board.

13. Device according to Claim 12,
**characterised in that** said pc board is a flexible board.

14. Device according to Claim 13,
**characterised in that** said pc board presents slots.

15. Device according to any of the Claims 6 to 14,
**characterised in that** said inductors and/or said capacitors are discrete elements.

16. Device according to any of the Claims 1 to 15,
**characterised in that** several resonators with coupler elements, which are tuned to different frequency ranges, are disposed in a close spatial relationship so that a resonator structure tuned to these frequency ranges will be achieved.

17. Device according to any of the Claims 1 to 16,
**characterised in that** the structure is symmetrical.

18. Device according to any of the Claims 1 to 17,
**characterised in that** conductor structures with a grounding surface, capacitors and/or inductors are provided on both sides of a pc board.

19. Device according to any of the Claims 1 to 18,
**characterised in that** said resonators are designed as differential resonators, and
that a differential signal is applied to said resonators.

20. Device according to any of the Claims 1 to 19,
**characterised in that** resonators matched with each other are provided on all parts.

21. Device according to any of the Claims 1 to 20,
**characterised in that** resonators are provided merely on one part, and
that conventional emitters or receivers are provided as resonators in the other parts.

22. Device according to Claims 21,
**characterised in that** said emitters or receivers comprise coils, ferrite cores and/or capacitors.

23. Device according to any of the Claims 1 to 22,
**characterised in that** the conductor systems serving to feed the signals or the energy to be transmitted or serving to pass the transmitted signals or energy on are shielded and hence designed in a form decoupled from the resonators.

24. Device according to any of the Claims 1 to 23,
**characterised in that** at least one activating unit is provided that activates the respective resonator only when the resonators of a part in relative movement are approaching.

25. Device according to any of the Claims 1 to 24,
**characterised in that** said resonators are so configured that they adapt their electrical properties to their working point only by the dielectric or magnetic properties of an approaching resonator.

26. Device according to any of the Claims 1 to 25,
**characterised in that** said resonators are coupled to said conductor system by additional active or passive components such as amplifiers and/or semiconductor switches.

27. Device according to any of the Claims 1 to 26,
**characterised in that** said resonators are shielded from the environment by a shield consisting of an electrically conducting material.

28. Device according to any of the Claims 1 to 27,
**characterised in that** said resonators are supplied by a switching or amplifying element.

29. Device according to Claim 28,
**characterised in that** an additional signalling means is provided, which generates a positive feedback signal for said switching or amplifying element from voltages and currents of the resonant elements in such a way that oscillation takes place at at least one resonance frequency.

30. Device according to Claim 29,
**characterised in that** said signalling means is so designed that it decouples a quantity in proportion to one part of a series resonance current.

31. Device according to Claim 29,
**characterised in that** said signalling means is so designed that it decouples a quantity in proportion to one part of a parallel resonance voltage.

32. Device according to Claim 29,
**characterised in that** in the case of several resonances, said signalling means is so designed that it decouples a composite signal consisting of a quantity proportional to a series resonance current and proportional to a parallel resonance voltage.

33. Device according to any of the Claims 29 to 32,
**characterised in that** an additional auxiliary oscillator is provided, which facilitates the start of the oscillation of the circuit.

34. Device according to any of the Claims 29 to 33,
**characterised in that** an analyser means is provided that determines the operating frequency of the arrangement and derives therefrom a signal in correspondence with the magnitude of the distance between the units mobile relative to each other.

35. Device according to any of the Claims 1 to 34,
**characterised in that** said parts mobile relative to each other perform a rotating movement.

36. Device according to any of the Claims 1 to 35,
**characterised in that** said parts mobile relative to each other perform a translational movement.

## Revendications

1. Dispositif de transmission, sans contact, des signaux électriques entre au moins deux unités mobiles l'une relativement à l'autre, dans lequel une pluralité des éléments coupleurs électromagnétiques est disposée sur les unités, entre lesquelles on doit transmettre des signaux et/ou de l'énergie, dans lequel lesdits éléments coupleurs sont formés sur au moins une unité de la façon définie dans ce qui suit :
- chaque élément coupleur (3a, 3b, 3c) constitue au moins un résonateur indépendant des autres éléments coupleurs, dont la fréquence de résonance est égale environ à la fréquence des signaux à transmettre;
- les éléments coupleurs (3a, 3b, 3c) individuels sont reliés l'un à l'autre via une ligne (2) ou une structure à conducteurs (2), et des éléments coupleurs d'une configuration similaire et/ou des éléments coupleurs configurés de façon connu en soi sont disposés sur les autres unités,
**caractérisé en ce que** l'ensemble du système composé de ladite ligne ou ladite structure à conducteurs et desdits éléments coupleurs est terminé sans réflexions sur ladite au moins une unité.

2. Dispositif selon la revendication 1,
**caractérisé en ce que** ledit résonateur ou lesdits résonateurs sont des cavités résonnantes, des conducteurs résonnants, des résonateurs diélectriques, ferrimagnétiques et/ou piézoélectriques.

3. Dispositif de transmission, sans contact, des signaux électriques et/ou de l'énergie entre au moins deux unités mobiles l'une relativement à l'autre, dans lequel une pluralité des éléments coupleurs électromagnétiques définis (83) est disposée sur ces unités, entre lesquelles on doit transmettre des signaux et/ou de l'énergie, au champ proche desdits éléments réalisant la transmission sans contact,
**caractérisé en ce que** des résonateurs formés par lesdits éléments coupleurs (93; 103) et des élément réactifs (92; 102) correspondants constituent une structure à conducteurs sur au moins une unité, cette structure étant configuré en tant que circuit en cascade et étant terminé sans réflexions, et
**en ce que** chaque arrangement à résonateurs en circuit en cascade coopère avec cette unité de façon à former un système de résonance à une fréquence de résonance supérieure à la fréquence maximale des signaux à large bande à transmettre, indépendamment des autres arrangements à résonateurs sur cette unité.

4. Dispositif selon la revendication 3,
**caractérisé en ce que** le système formé par lesdits résonateurs présente une caractéristique passe-bas.

5. Dispositif selon la revendication 3 ou 4,
**caractérisé en ce que** l'ensemble de ladite structure à conducteurs n'est pas capable de résonner.

6. Dispositif selon une quelconque des revendications 2 à 5,
**caractérisé en ce que** chaque résonateur consiste en un élément comprenant au moins un composant, qui crée un effet inductif et capacitif, et
**en ce que** le résonateur suivant prend la tension ou le courant sur au moins un élément réactif du résonateur précédant en tant que son signal d'entrée.

7. Dispositif selon la revendication 6,
**caractérisé en ce que** chaque résonateur consiste en au moins une, de préférence une seule, résistance inductive et en au moins une charge capacitive.

8. Dispositif selon la revendication 7,
**caractérisé en ce que** les résistances inductives individuelles des résonateurs différents d'une unité sont reliées en série.

9. Dispositif selon la revendication 7 ou 8,
**caractérisé en ce qu'**une ligne en continu constitue les résistances inductives individuelles des résonateurs respectifs.

10. Dispositif selon la revendication 9,
**caractérisé en ce que** les charges capacitives sont configurées en tant que des éléments conductifs plats, qui sont reliés via des lignes de branchement à ladite ligne en continu ou directement aux côtés latéraux de la dernière.

11. Dispositif selon la revendication 10,
**caractérisé en ce que** des éléments conductifs plats sont disposés sur les deux côtés de ladite ligne en continu.

12. Dispositif selon une quelconque des revendications 6 à 11,
**caractérisé en ce que** lesdites résistances inductives ou respectivement charges capacitives sont configurées de la manière de structures d'une plaquette imprimée.

13. Dispositif selon la revendication 12,
**caractérisé en ce que** ladite plaquette imprimée est une plaque flexible.

14. Dispositif selon la revendication 13,
**caractérisé en ce que** ladite plaquette imprimée est munie des fentes.

15. Dispositif selon une quelconque des revendications 6 à 14,
**caractérisé en ce que** lesdites résistances inductives et/ou lesdites charges capacitives sont des éléments discrets.

16. Dispositif selon une quelconque des revendications 1 à 15,
**caractérisé en ce que** plusieurs résonateurs aux éléments coupleurs, qui sont accordés aux plages de fréquences différentes, sont disposés à proximité mutuelle en espace de façon à achever une structure de résonateur accordée à ces plages de fréquences.

17. Dispositif selon une quelconque des revendications 1 à 16,
**caractérisé en ce que** la structure est symétrique.

18. Dispositif selon une quelconque des revendications 1 à 17,
**caractérisé en ce que** des structures à conducteurs à une surface de mise à la terre, des charges capacitives et/ou des résistances inductives sont disposés des deux côtés d'une plaquette imprimée.

19. Dispositif selon une quelconque des revendications 1 à 18,
**caractérisé en ce que** lesdits résonateurs sont conçus sous forme de résonateurs différentiels, et
**en ce qu'**un signal différentiel est appliqué auxdits résonateurs.

20. Dispositif selon une quelconque des revendications 1 à 19,
**caractérisé en ce que** des résonateurs accordés l'un à l'autre sont disposés sur toutes les unités.

21. Dispositif selon une quelconque des revendications 1 à 20,
**caractérisé en ce que** des résonateurs sont disposés seulement sur une unité, et
**en ce que** des émetteurs ou récepteurs conventionnels sont disposés en tant que résonateurs dans toutes les autres unités.

22. Dispositif selon la revendication 21,
**caractérisé en ce que** lesdits émetteurs ou récepteurs comprennent des bobines, des cores de ferrite et/ou des charges capacitives.

23. Dispositif selon une quelconque des revendications 1 à 22,
**caractérisé en ce que** les systèmes à conducteurs, qui servent à l'alimentation des signaux ou de l'énergie à transmettre ou à transférer les signaux transmis ou l'énergie transmise, sont blindés et ainsi conçu sous une forme découplée des résonateurs.

24. Dispositif selon une quelconque des revendications 1 à 23,
**caractérisé en ce qu'**au moins une unité d'activation est disposée, qui sert à activer le résonateur respectif seulement, quand les résonateurs d'une unité en mouvement relatif se rapprochent.

25. Dispositif selon une quelconque des revendications 1 à 24,
**caractérisé en ce que** lesdits résonateurs sont configurés de façon, qu'ils adaptent leur propriétés électriques à leur point de travail seulement par les propriétés diélectriques ou magnétiques d'un résonateur rapprochant.

26. Dispositif selon une quelconque des revendications 1 à 25,
**caractérisé en ce que** lesdits résonateurs sont couplés audit système au conducteurs par des composants actifs ou passifs supplémentaires, comme des amplificateurs et/ou des commutateurs semi-conducteurs.

27. Dispositif selon une quelconque des revendications 1 à 26,
**caractérisé en ce que** lesdits résonateurs sont blindés des environs moyennant un écran, qui consiste en un matériau conducteur électrique.

28. Dispositif selon une quelconque des revendications 1 à 27,
**caractérisé en ce que** lesdits résonateurs sont alimentés par un élément commutateur ou amplificateur.

29. Dispositif selon la revendication 28,
**caractérisé en ce qu'**un moyen de signalisation supplémentaire est disposé, qui engendre un signal de rétroaction pour ledit élément commutateur ou amplificateur à partir des tensions et courants des éléments résonnants d'une telle manière, que l'oscillation se fait à au moins une fréquence de résonance.

30. Dispositif selon la revendication 29,
**caractérisé en ce que** ledit moyen de signalisation est conçu de façon, qu'il découple une quantité en proportion à une fraction d'un courant de résonance sériel.

31. Dispositif selon la revendication 29,
**caractérisé en ce que** ledit moyen de signalisation est conçu de façon, qu'il découple une quantité en proportion à une fraction d'une tension de résonance parallèle.

32. Dispositif selon la revendication 29,
**caractérisé en ce qu'**au cas de plusieurs résonances, ledit moyen de signalisation est conçu de façon, qu'il découple un signal composite, qui consiste en une quantité proportionnelle à un courant de résonance sériel et proportionnelle à une tension de résonance parallèle.

33. Dispositif selon une quelconque des revendications 29 à 32,
**caractérisé en ce qu'**un oscillateur auxiliaire supplémentaire est disposé, qui sert à faciliter le début de l'oscillation du circuit.

34. Dispositif selon une quelconque des revendications 29 à 33,
**caractérisé en ce qu'**un moyen analyseur est disposé, qui établit la fréquence de service de f l'arrangement et en dérive un signal en correspondance avec la grandeur de la distance entre les unités mobiles l'une relativement à l'autre.

35. Dispositif selon une quelconque des revendications 1 à 34,
**caractérisé en ce que** lesdites unités mobiles l'une relativement à l'autre subissent un mouvement rotatif.

36. Dispositif selon une quelconque des revendications 1 à 35,
**caractérisé en ce que** lesdites unités mobiles l'une relativement à l'autre subissent un mouvement de translation.
